# EUROPEAN PATENT SPECIFICATION

(11) **EP 1 957 800 B1**
(45) Date of publication and mention of the grant of the patent: **29.12.2010**
(21) Application number: 06803832.2
(22) Date of filing: 19.09.2006
(51) Int. Cl.: F04D 29/16, F04D 29/28, F16J 15/447, F01D 11/02

(54) **IMPELLER FOR A CENTRIFUGAL COMPRESSOR**
ANTRIEBSRAD FÜR EINEN RADIALVERDICHTER
IMPULSEUR DESTINE A UN COMPRESSEUR CENTRIFUGE

(30) Priority: 19.09.2005 US 718438 P
(43) Date of publication of application: 20.08.2008
(73) Proprietor: Ingersoll Rand Company, Montvale, New Jersey 07645 (US)
(72) Inventor: MULLER, Michael O., Charlotte, NC 28207 (US); ROBB, Jay L., Rockwell, NC 28138 (US); MARIANI, Filippo, 20124 Milan (IT); HOUSTON, Russell A., Sherrills Ford, NC 28673 (US)
(74) Representative: Every, David Aidan
(86) International application number: PCT/US2006/036417
(87) International publication number: WO 2007/035699

(56) References cited:
- EP-A- 0 408 010
- EP-A1- 0 518 027
- DE-A1- 4 125 763
- FR-A- 2 199 386
- US-B1- 6 435 822

## Description

The invention relates to an impeller for a centrifugal compressor. More particularly, the invention relates to an impeller for a centrifugal compressor that includes a sealing surface on a back portion.

Compression of a gas in centrifugal compressors, also known as dynamic compressors, is based on the transfer of energy from a set of rotating impeller blades to the gas. A conventional centrifugal gas compressor includes a stationary housing and an impeller within the housing which is rotatable about an axis. Gas, such as air is directed in a generally axial direction to leading edges of the impeller blades, and exits at trailing edges of the blades in a generally radial direction, typically into a diffuser and then a volute. The rotating blades impart energy by changing the momentum or velocity, and the pressure of the gas. The gas momentum, which is related to kinetic energy, is then converted into pressure energy by decreasing the velocity of the gas in the stationary diffuser and downstream collecting systems (e.g., the volute). The pressure of the gas at the trailing edges of the blades is increased compared to gas at the leading edges of the blades. Because centrifugal compressors include both stationary and rotating components, seals are required to contain the compressed gas discharged from the impeller.

Due to a non-symmetric stiffness of the impeller, mass-related body forces induced by rotation (e.g., centrifugal forces) impart to the impeller, a characteristic displacement directed toward the blade side of the impeller.

The net axial thrust acting on a shaft that includes one or more impellers can be absorbed by a thrust bearing having a load carrying capacity that generally depends on the bearing type, design, performance and cost. During operation of the impeller, different aerodynamically induced conditions may develop so that the direction of the net thrust may reverse, thus requiring an additional thrust bearing to maintain the rotor assembly in the proper axial position with respect to the surrounding stationary structures of the compressor.
EP-A-0518027 describes a centrifugal compressor comprising all the features of the preamble of claim 1 in which a back face of the impeller has a plurality of steps for interaction with a stationary seal member.

According to the present invention there is provided an impeller for a centrifugal gas compressor including a stationary seal member that includes a plurality of seal tips, the impeller operable to produce a flow of fluid, the impeller comprising: a hub including a front face, a back face, and an axis of rotation; a plurality of blades extending from the front face, each of the blades having an inducer portion and an exducer portion and cooperating with an adjacent blade and the front face to at least partially define one of a plurality of impeller channels, a portion of the flow of fluid passing through one of the impeller channels such that the flow of fluid defines a first pressure adjacent the inducer portion and a second pressure that is higher than the first pressure adjacent the exducer portion; and characterised in that there is provided an extension cantilevered axially from the back face, the extension including a radially outer face including a seal portion with a plurality of stepped surfaces wherein a first of the stepped surfaces nearest the back face has a first diameter and each subsequent step in a direction away from the back face has a smaller diameter than the first of the stepped surfaces and an adjacent stepped surface on the side nearest the back face, each of the seal tips disposed adjacent one of the stepped surfaces to define a plurality of seal points.

Each of the first seal members may be disposed adjacent one of the second seal members to define a plurality of seal points. Each of the seal points may be located at a seal point diameter. The average seal point diameter may be greater than or equal to about 50 percent of the outer diameter.

The compressor may include a motor and an impeller having a hub that is coupled to the motor. The impeller may be rotatable in response to rotation of the motor. The impeller is operable to draw a flow of fluid into the inducer in a substantially axial direction and discharge the flow of fluid from the exducer in a substantially radial direction. A rotating seal member extends from the impeller and is spaced a non-zero distance from the hub. A stationary seal member is positioned adjacent the rotating seal member and cooperates with the rotating seal member to define a plurality of seal points.

Other features and advantages of the invention will become apparent to those skilled in the art upon review of the following detailed description, claims, and drawings.

### BRIEF DESCRIPTION OF THE DRAWINGS

Fig. 1 is a cross section view of a fluid compression system embodying the invention and taken through an axis of rotation;

Fig. 2 is an enlarged cross section view of an impeller of the fluid compression system of Fig. 1;

Fig. 3 is a section view of a portion of the impeller of Fig. 2;

Fig. 4 is another section view of a portion of the impeller of Fig. 2;

Fig. 5 is a cross section of a stationary seal ring of Fig. 1 taken through an axis of rotation;

Fig. 6 is a cross section view of two teeth of the stationary seal ring of Fig. 5;

Fig. 7 is a cross section view of another stationary seal ring embodying the invention and including a flow path therethrough;

Fig. 8 is a section view of a portion of the centrifugal compressor of Fig. 2;

Fig. 9 is a section view of another portion of the centrifugal compressor of Fig. 2;

Fig. 10 is a schematic illustration of a pressure distribution for a prior art impeller; and

Fig. 11 is a schematic illustration of a pressure distribution for the impeller of Fig. 2.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The order of limitations specified in any method claims does not imply that the steps or acts set forth therein must be performed in that order, sunless an order is explicitly set forth in the specification.

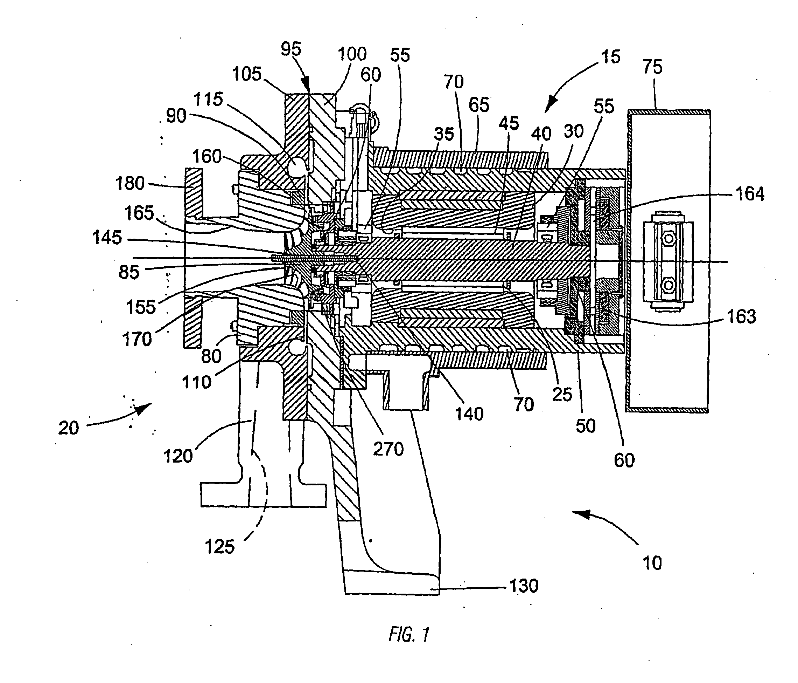

Fig. 1 illustrates a fluid compression system 10 that includes a prime mover, such as a motor 15 coupled to a compressor 20 and operable to produce a compressed fluid. In the illustrated construction, an electric motor 15 is employed as the prime mover. However, other constructions may employ other prime movers such as but not limited to internal combustion engines, diesel engines, combustion turbines, etc.

The electric motor 15 includes a rotor 25 and a stator 30 that defines a stator bore 35. The rotor 25 is supported for rotation on a shaft 40 and is positioned substantially within the stator bore 35. The illustrated rotor 25 includes permanent magnets 45 that interact with a magnetic-field produced by the stator 30 to produce rotation of the rotor 25 and the shaft 40. The magnetic field of the stator 30 can be varied to vary the speed of rotation of the shaft 40. Of course, other constructions may employ other types of electric motors (e.g.; synchronous, induction, brushed DC motors, etc.) if desired.

The motor 15 is positioned within a housing 50 which provides both support and protection for the motor 15. A bearing 55 is positioned on either end of the housing 50 and is directly or indirectly supported by the housing 50. The bearings 55 in turn support the shaft 40 for rotation. In the illustrated construction, magnetic bearings 55 are employed with other bearings (e.g., roller, ball, needle, etc.) also suitable for use. In the construction illustrated in Fig. 1, secondary bearings 60 are employed to provide shaft support in the event one or both of the magnetic bearings 55 fail.

In some constructions, an outer jacket 65 surrounds a portion of the housing 50 and defines cooling paths 70 therebetween. A liquid (e.g., glycol, refrigerant, etc.) or gas (e.g., air, carbon dioxide, etc.) coolant flows through the cooling paths 70 to cool the motor 15 during operation.

An electrical cabinet 75 may be positioned at one end of the housing 50 to enclose various items such as a motor controller, breakers, switches, and the like. The motor shaft 40 extends beyond the opposite end of the housing 50 to allow the shaft to be coupled to the compressor 20.

The compressor 20 includes an intake housing 80 or intake ring, an impeller 85, a diffuser 90, and a volute 95. The volute 95 includes a first portion 100 and a second portion 105. The first portion 100 attaches to the housing 50 to couple the stationary portion of the compressor 20 to the stationary portion of the motor 15. The second portion 105 attaches to the first portion 100 to define an inlet channel 110 and a collecting channel 115. The second portion 105 also defines a discharge portion 120 that includes a discharge channel 125 that is in fluid communication with the collecting channel 115 to discharge the compressed fluid from the compressor 20.

In the illustrated construction, the first portion 100 of the volute 95 includes a leg 130 that provides support for the compressor 20 and the motor 15. In other constructions, other components are used to support the compressor 20 and the motor 15 in the horizontal position. In still other constructions, one or more legs, or other means are employed to support the motor 15 and compressor 20 in a vertical orientation or any other desired orientation.

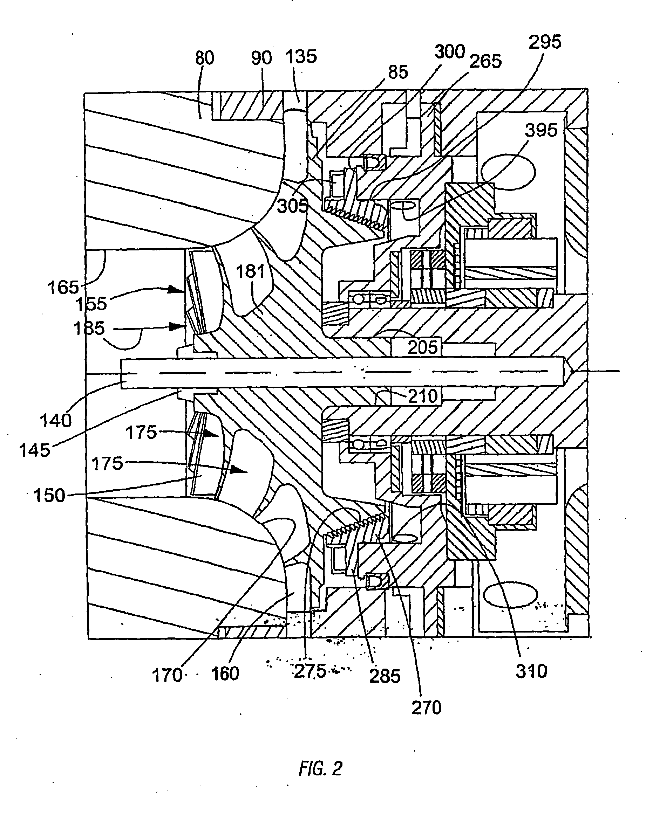

The diffuser 90 is positioned radially inward of the collecting channel 115 such that fluid flowing from the impeller 85 must pass through the diffuser 90 before entering the volute 95. The diffuser 90 includes aerodynamic surfaces 135 (e.g., blades, vanes, fins, etc.), shown in Fig. 2, arranged to reduce the flow velocity and increase the pressure of the fluid as it passes through the diffuser 90.

The impeller 85 is coupled to the rotor shaft 40 such that the impeller 85 rotates with the motor rotor 25. In the illustrated construction, a rod 140 threadably engages the shaft 40 and a nut 145 threadably engages the rod 140 to fixedly attach the impeller 85 to the shaft 40. The impeller 85 extends beyond the bearing 55 that supports the motor shaft 40 and, as such is supported in a cantilever fashion. Other constructions may employ other attachment schemes to attach the impeller 85 to the shaft 40 and other support schemes to support the impeller 85. As such, the invention should not be limited to the construction illustrated in Fig. 1. Furthermore, while the illustrated construction includes a motor 15 that is directly coupled to the impeller 85, other constructions may employ a speed increaser such as a gear box to allow the motor 15 to operate at a lower speed than the impeller 85.

The impeller 85 includes a plurality of aerodynamic surfaces or blades 150 that are arranged to define an inducer portion 155 and an exducer portion 160. The inducer portion 155 is positioned at a first end of the impeller 85 and is operable to draw fluid into the impeller 85 in a substantially axial direction. The blades 150 accelerate the fluid and direct it toward the exducer portion 160 located near the opposite end of the impeller 85. The fluid is discharged from the exducer portion 160 in at least partially radial directions that extend 360 degrees around the impeller 85.

The impeller 85 cooperates with a stationary seal ring 270 to define a seal. The seal is positioned to reduce the axial force applied to the back face of the impeller 85, thereby reducing the overall axial thrust toward the blades 150. The thrust is reduced to a level that allows for the use of an active magnetic thrust bearing 163 rather than a more conventional thrust bearing. The magnetic thrust bearing 163 includes a thrust disc 164 having a reduced diameter as compared to that which would be necessary absent the aforementioned seal system.

The intake housing 80, sometimes referred to as the intake ring, is connected to the volute 95 and includes a flow passage 165 that leads to the impeller 85. Fluid to be compressed is drawn by the impeller 85 down the flow passage 165 and into the inducer portion 155 of the impeller 85. The flow passage 165 includes an impeller interface portion 170 that is positioned near the blades 150 of the impeller 85 to reduce leakage of fluid over the top of the blades 150. Thus, the impeller 85 and the intake housing 80 cooperate to define a plurality of substantially closed flow passages 175.

In the illustrated construction, the intake housing 80 also includes a flange 180 that facilitates the attachment of a pipe or other flow conducting or holding component. For example, a filter assembly could be connected to the flange 180 and employed to filter the fluid to be compressed before it is directed to the impeller 85. A pipe would lead from the filter assembly to the flange 180 to substantially seal the system after the filter and inhibit the entry of unwanted fluids or contaminates.

Turning to Fig. 2, the impeller 85 is illustrated in greater detail. The impeller 85 includes a hub 181 or body having a front side 182 from which the blades extend and a back side 184 opposite the front side 182. The inducer portion 155 is substantially annular and draws fluid along an intake path 185 into the impeller 85. The fluid enters in a substantially axial direction and flows through the passages 175 defined between adjacent blades 150 to the exducer portion 160. The outlet of the exducer portion 160 defining an outside diameter 190 of the impeller 85.

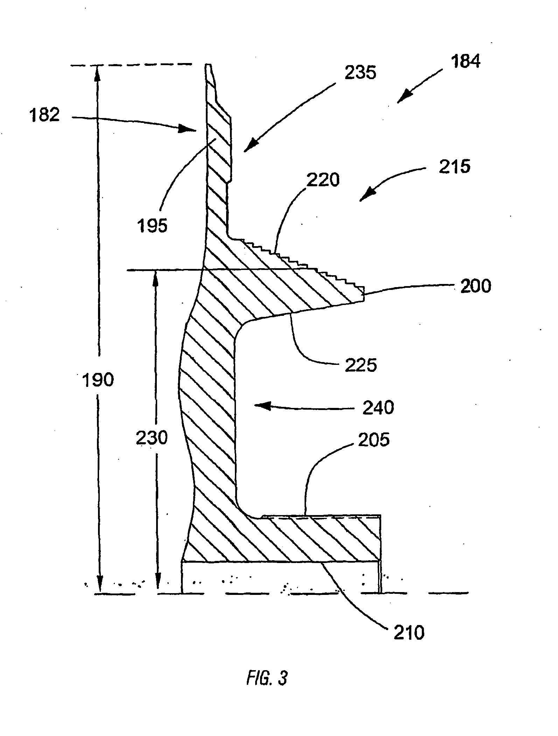

Fig. 3 illustrates the back side 184 of the impeller 85 as including a balancing ring 195, an extension 200, and an alignment portion 205. The alignment portion 205 is sized to fit at least partially within a bore 210 formed as part of the shaft 40. This provides support for the impeller 85 to inhibit mis-alignment between the shaft 40 and the impeller 85 that can produce undesirable vibrations. In some constructions, the shaft bore 210 and the alignment portion 205 includes alignment features (e.g., splines) that aid in providing the desired alignment.

The balancing ring 195 provides additional material on the back side 184 of the impeller 85 for use during balancing. Material can be removed from the balance ring 195 at select radial and angular positions to statically and dynamically balance the impeller 85 as required for the particular application. Of course, other constructions position the balance ring 195 differently or omit the balance ring 195 completely.

The extension 200 extends from the back side 184 in a generally axial direction away from the blades 150. The extension 200 includes a first seal portion 215 that includes a plurality of seal surfaces 220, and an inner surface 225 that, in some constructions, may include another plurality of seal surfaces. The first seal portion 215 defines an average radial diameter 230 that, in preferred constructions is greater than about 50 percent of the outermost diameter 190 of the impeller 85. The position of the extension 200 divides the back side 184 of the impeller 85 into a first annular 235 area disposed radially outside of the extension 200 and extending to the outermost diameter 190 of the impeller 85, and a second annular area 240 disposed radially inside of the extension 200 and extending radially inward to the alignment portion 205.

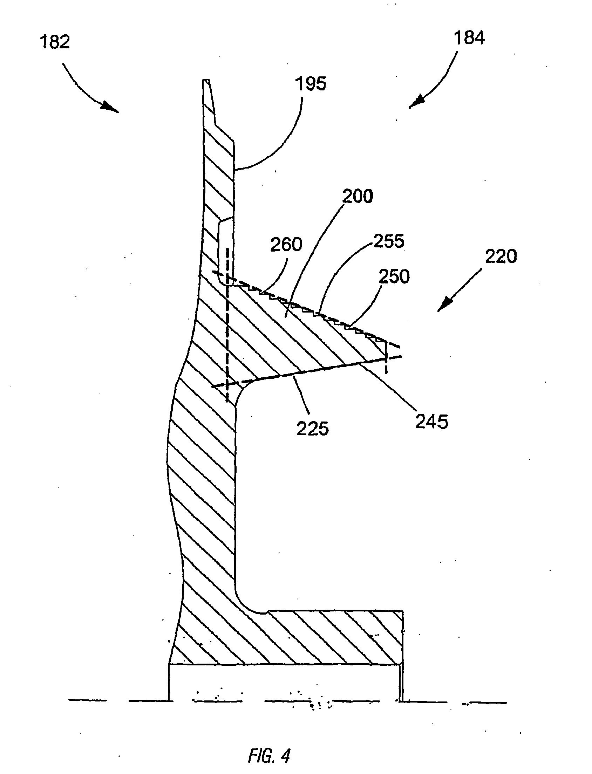

Fig. 4 illustrates the extension 200 in greater detail. An envelope 245 around the cantilevered extension 200 in a cross section that includes the axis is generally trapezoidal. In three dimensions, the outer envelope of the extension 200 includes two frustoconical surfaces, although other shapes for the extension 200 are also possible. The plurality of seal surfaces 220 of the first seal portion 215 are defined by a plurality of steps 250. Each step 250 includes a generally axially extending first portion 255 and a generally radially extending second portion 260, with the first portion 255 forming substantially a right angle with the second portion 260. As shown in Fig. 4, the first axially-extending surface 255 nearest the back side 184 has the largest diameter with each subsequent axial surface 255 reducing in diameter as they move further from the back side 184. In other words, a sequence defined by corresponding radial dimensions of the axial surfaces 255 taken in axial order, starting with the surface 255 nearest the blades 150 decreases substantially uniformly. The generally radial surfaces 260 interconnect adjacent axial surfaces 255 to complete the plurality of seal surfaces 220. In preferred constructions, the axial surfaces 255 are substantially equal in axial length and the radial change between any two adjacent axial surfaces 255 is approximately equal. In other words, the radial surfaces 260 are all substantially equal in length. In other constructions, other step patterns are employed. For example, one construction employs alternating high portions and low portions. Thus, the invention should not be limited to the illustrated pattern of seal surfaces 220 alone.

In preferred constructions, the extension 200, the balance ring 195, the alignment portion 205, and the blades 150, are integrally-formed from a single homogeneous piece of material. Of course other constructions, may attach or otherwise form the various components.

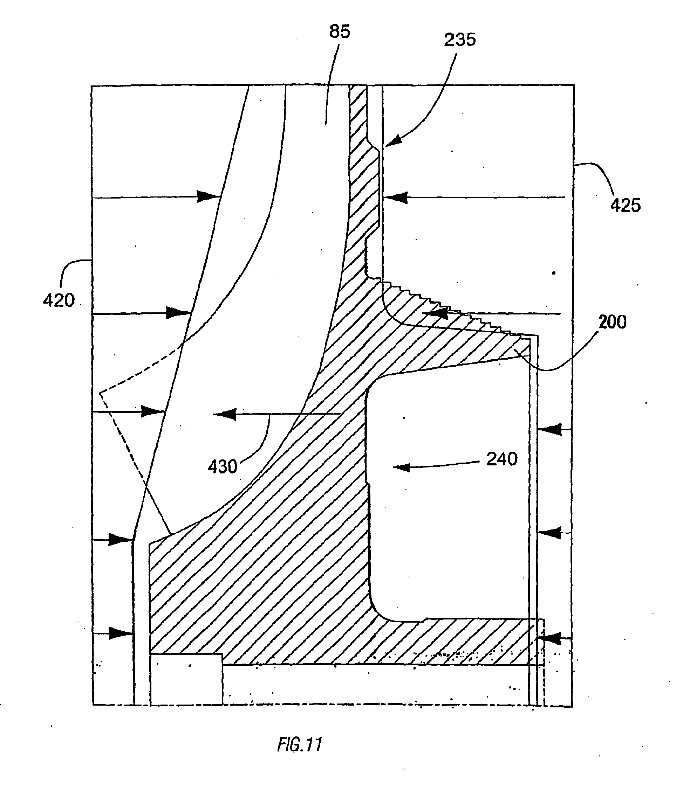

Returning to Fig. 2, the illustrated construction includes a bearing support housing 265 that attaches to the motor housing 50. The bearing support housing 265 at least partially supports the bearings 55, 60 and may also support other stationary components of the fluid compression system 10. A stationary seal ring 270 that attaches to the bearing support housing 265 includes a second seal portion 275 that is positioned adjacent the first seal portion 215 to define a seal 280. As will be discussed in greater detail with regard to Fig. 11, the seal 280 is preferably a labyrinth-type seal.

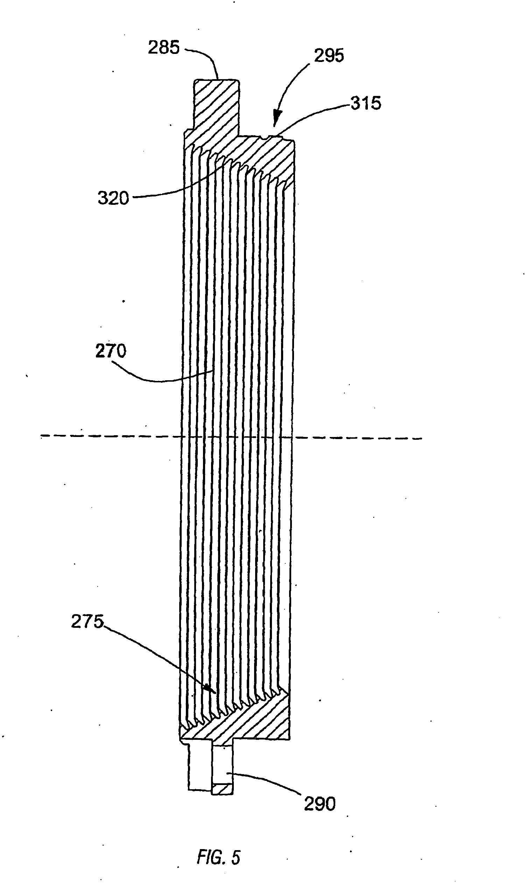

Fig. 5 illustrates the stationary seal ring 270 in greater detail than that shown in Fig. 2. The stationary seal ring 270 includes the second seal portion 275, a flange 285, a plurality of bolt holes 290, and an alignment surface 295. The flange 285 is arranged to abut against a substantially radial planar surface 298 to position the stationary seal ring 270 in the desired axial position. In preferred constructions a shim 300 (shown in Fig. 2) having a selectable or adjustable thickness is positioned between the flange 285 and the radial planar surface 298 to set the axial position of the stationary seal ring 270. Bolts 305 (shown in Fig. 2) pass through the bolt holes 290 and attach the stationary seal ring 270 to the bearing support housing 265 or other stationary component.

The alignment surface 295 fits within a bore 310 formed as part of the bearing support housing 265 and sized to receive the alignment surface 295. In preferred constructions, a slight interference or press fit is employed to assure that the stationary seal ring 270 is positioned coaxially with the bearing support housing 265. To accommodate the press fit, the alignment surface 295 may include crush features 315 such as bumps, grooves, or other features that allow for easier deformation during assembly. Once the bearing support housing 265 and the stationary seal ring 270 are coupled to one another, very little relative movement is possible. Jack bolts may be employed for disassembly. In constructions that employ jack bolts, additional threaded apertures pass through the flange 285 to allow the bolts to separate the stationary seal ring 270 and the bearing support housing 265. In other constructions, the bearing support housing 265 and the stationary seal ring 270 are formed as a single component or more than two components if desired.

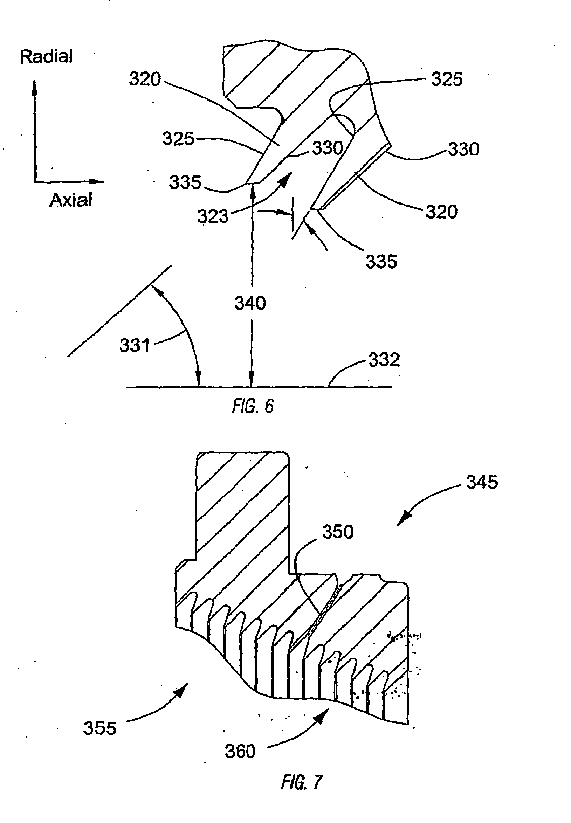

As illustrated in Fig. 5, the second seal portion 275 includes a plurality of teeth 320 that extend at least partially radially inward. Fig. 6 illustrates two of the teeth 320 and a cavity 323 therebetween in greater detail. Each tooth 320 is substantially trapezoidal in cross-section with large fillet radiuses between adjacent teeth 320 and between the teeth 320 and the remainder of the stationary seal ring 270. Each tooth 320 thus includes an upstream side 325 and a downstream side 330 that extend at least partially radially inward and terminate at a tip surface 335. In the illustrated construction, the upstream side 325 and downstream side 330 are not parallel. Specifically, each tooth 320 generally extends in a direction having both a radial component and an axial component such that each tooth defines an oblique angle 331 with respect to an axis 332. The downstream side 330 of each tooth 320 is oriented at approximately 45 degrees with respect to the axial direction and the upstream side 325 of each tooth 320 is oriented at approximately 30 degrees with respect to the radial direction. However, other constructions may employ parallel upstream sides 325 and downstream sides 330 or angles other than those illustrated herein.

The tip surface 335 extends in a substantially axial direction and defines a tip radius 340. In the illustrated construction, the tip radius 340 of the tooth 320 adjacent the impeller 85 is the largest with each adjacent tooth 320 having a tip radius 340 that is slightly smaller as the teeth 320 get further from the impeller 85. In other words, a sequence defined by corresponding radial dimensions 340 of the tip surfaces 335 in axial order, starting with a tooth 320 axially nearest the blades 150, is axially decreasing. In a preferred construction, the change in the radius 340 of each tip surface 335 is approximately equal to the change in radius of the plurality of axial step surfaces 255. In other constructions, the teeth 320 have sharp or knife edge tips, rather than the axial surface 335 illustrated herein. In still other constructions, rounded tips are employed.

Fig. 7 illustrates another construction of a stationary seal ring 345 that is similar to the stationary seal ring 270 of Fig. 5 but additionally includes a flow passage 350. The flow passage 350 divides the stationary seal ring 345 into a high-pressure portion 355 and a low-pressure portion 360 and is particularly suited for use in applications where it is desirable to isolate the fluid being compressed. A gas at a higher pressure than the expected pressure of the compressed fluid at the point of entry of the flow passage 350 can be introduced at the flow passage 350. The high-pressure gas will inhibit the flow of the compressed fluid past the flow passage 350. Rather, the introduced gas will flow through the low-pressure portion 360 of the seal ring 345. Alternatively, a low pressure can be applied at the flow passage 350 such that fluid being compressed passes through the high-pressure portion 355 and air is drawn in through the low-pressure portion 360. The air and fluid being compressed mix in the flow passage 350 and are drawn out of the system 10.

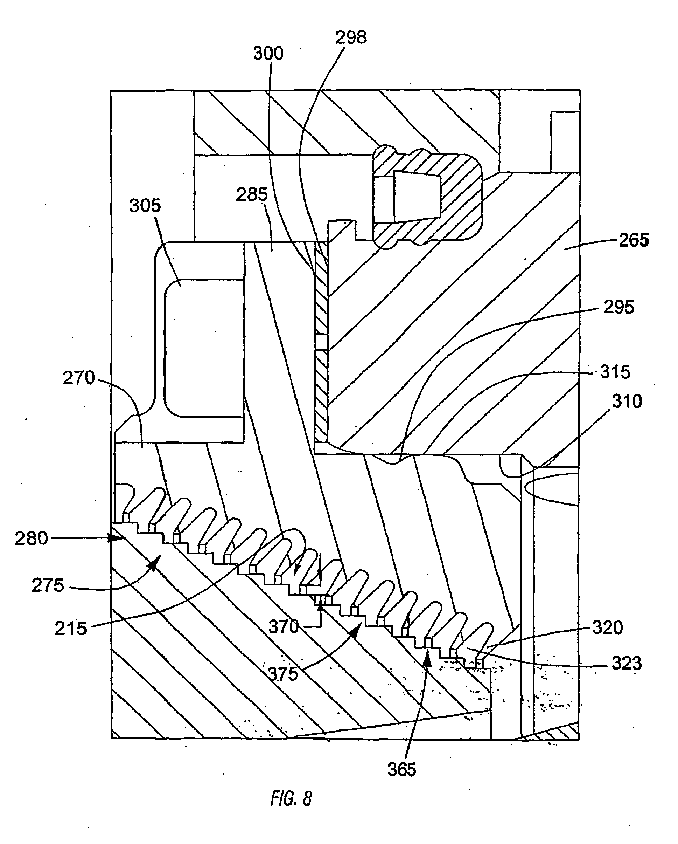

Figs. 8 illustrates the completed labyrinth seal 280 in greater detail. In the illustrated construction, each tip surface 335 aligns with one of the axial surfaces 255 to define a radial seal point 365 having a narrow gap 370 between the tip surface 335 and the axial surface 255. In addition, some constructions may position the tooth 320 adjacent the radially-extending surface 260 to define an axial seal point 375. In other constructions, other arrangements may be employed. For example, multiple teeth 320 could be positioned over common axial surfaces 255. Alternatively, straight teeth could be employed.

The labyrinth seal 280 provides for an adequate seal without undesirable contact between the rotating and the stationary components. Should such contact inadvertently occur, the relatively narrow teeth 320 provide little surface area for friction and heating. Additionally, one or both of the seal surfaces 335, 255 can be made of a resilient or abradeable material to further reduce the likelihood of damage to the impeller 85 or the stationary seal ring 270 should undesirable contact occur.

In operation, power is provided to the motor 15 to produce rotation of the shaft 40 and the impeller 85. As the impeller 85 rotates, fluid to be compressed is drawn into the intake housing 80 and into the inducer portion 155 of the impeller 85. The impeller 85 accelerates the fluid from a velocity near zero to a high velocity at the exducer portion 160. In addition, the impeller 85 produces an increase in pressure between the inducer 155 and the exducer 160.

After passing through the impeller 85, the fluid enters the diffuser 90. The diffuser 90 acts on the fluid to reduce the velocity. The velocity reduction converts the dynamic energy of the flow of fluid into potential energy or high pressure. The now high-pressure fluid exits the diffuser 90 and inters the volute 95 via the inlet channel 110. The high-pressure fluid then passes into the collecting channel 115 which collects fluid from any angular position around the inlet channel 110. The collecting channel 115 then directs the high-pressure fluid out of the volute 95 via the discharge channel 125. Once discharged from the volute 95, the fluid can be passed to several different components, including but not limited to a drying system, an interstage heat exchanger, another compressor, a storage tank, a user, an air use system, etc.

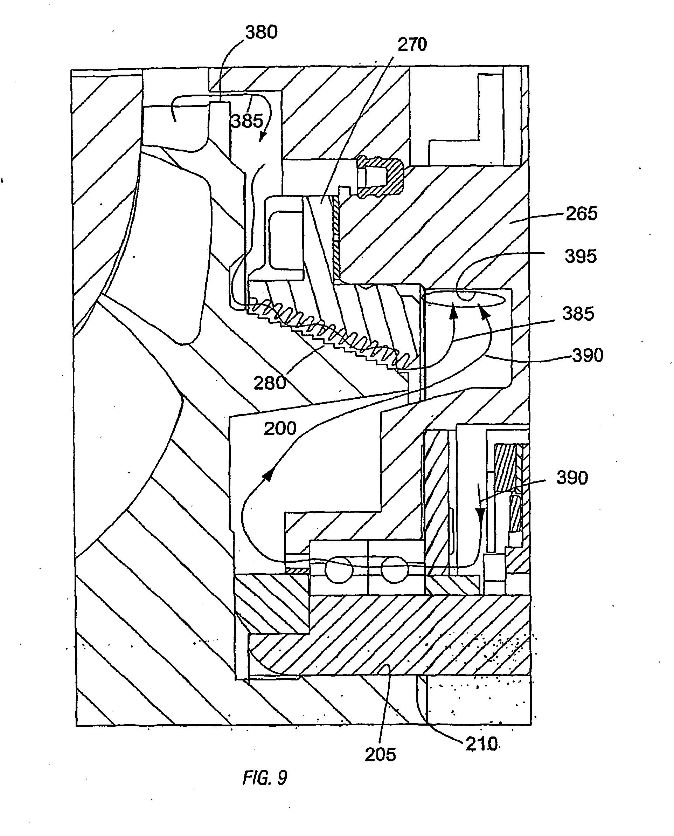

With reference to Fig. 9, it can be seen that a space 380 is provided between the rotating impeller 85 and the stationary diffuser 90. While it is desirable to make this space 380 small, it is inevitable that some compressed fluid will leak around the impeller 85, through this space 380, and to the back side 184 of the impeller 85. This high-pressure leakage flow 385 passes radially inward until it reaches the labyrinth seal 280. To pass through the labyrinth seal 280, the leakage flow must pass between each tip surface 335 and the radial and axial surfaces 255, 260 adjacent the tooth 320. The flow 385 first must accelerate to pass through the narrow gap 370 or openings defined between the tooth 320 and the respective radial and axial surfaces 255, 260. After passing through these narrow gaps 370, the flow 385 is exposed to the relatively large cavity 323 between the adjacent teeth 320 and rapidly expands to fill the cavity 323. The expansion is inefficient and produces a series of eddies and flow vortices that slightly reduce the pressure of the fluid. In addition, the rotation of the impeller 85 tends to force the fluid radially outward into the bottom of the cavity 323 and away from the next seal opening 370 that is disposed radially inward of the prior seal opening 370. This process continues as the flow 385 passes each tooth 320 until the flow 385 finally exits the labyrinth seal 280 at a pressure that is only slightly greater than atmospheric pressure (or the ambient pressure of the compression system 10).

A flow of cooling air 390 passes through the motor 15 and the bearings 55, 60 and enters the space between the impeller 85 and the bearing support housing 265. The cooling air 390 is also at a pressure slightly above atmospheric pressure (or ambient pressure) and preferably at a pressure slightly above the pressure of the leakage flow 385 exiting the labyrinth seal 280. The two flows 385, 390 mix and exit the system via a vent 395 formed in the housing 50. By maintaining the cooling air 390 at a pressure slightly higher than the leakage flow 385, the system 10 inhibits the unwanted flow 385 of hot leakage flow into the motor 15. In addition, the clearance space between the impeller 85 and the bearing support housing 265 is maintained at a small value to further inhibit the passage of hot leakage flow 385 into the bearings 55, 60 and the motor 15.

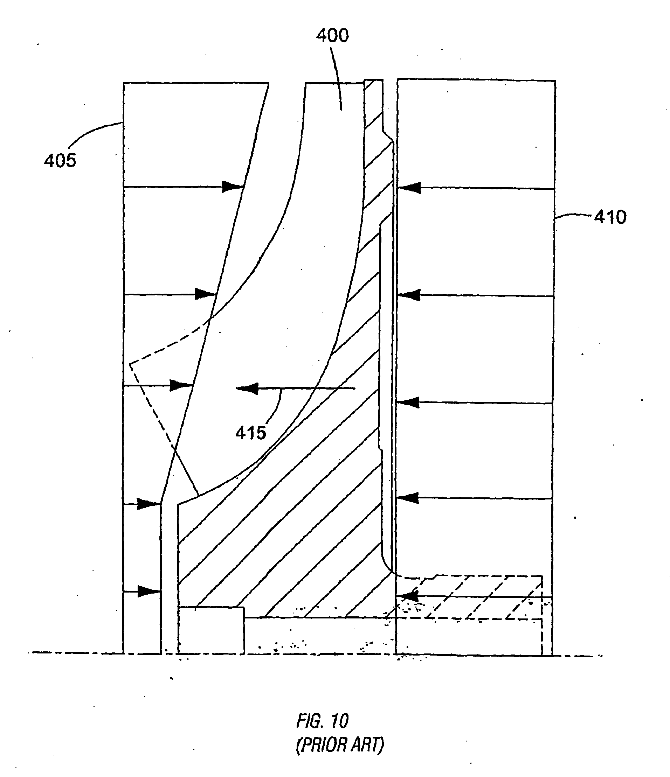

The positioning of the extension 200 also aids in balancing the thrust load produced by the impeller 85 during operation. Fig. 10 illustrates a prior art impeller 400 that includes a standard seal arrangement on the shaft. Shaft seals are generally employed as the flow area at the shaft for a given radial clearance is smaller than the flow area for the same radial clearance at a larger diameter. During operation, the innermost leading edge of the impeller 400 is exposed to a pressure that is slightly above the intake pressure of the impeller 400. The pressure increases in a substantially linear fashion as the flow moves along the impeller. At the exit of the impeller (exducer) the pressure is at its highest level (prior to passage through the diffuser and the volute). Thus, the front portion of the impeller 400 is exposed to a pressure gradient 405 that increases with the radial distance from the axis of rotation.

A portion of the high-pressure fluid exiting the impeller 400 flows around the outer diameter of the impeller 400 to the back portion. There is no mechanism, other than the shaft seals on the back portion of the prior art impeller 400 to reduce the pressure of the leakage flow. As such, the entire back portion is exposed to the high-pressure fluid. Thus, the back face is subjected to a substantially uniform pressure gradient 410 across the entire area. This results in a net thrust force toward the inlet as indicated by arrow 415.

Turning to Fig. 11, the present impeller 85 is illustrated for comparison. The pressure and the pressure gradient 420 applied to the front side 182 of the impeller 85 is substantially the same as that of the prior art impeller 400 of Fig. 10. However, the position of the extension 200 produces a different pressure gradient 425 on the back side 184. As can be seen, the high-pressure leakage is applied only to the first annular portion 235 disposed radially outside of the extension 200. The pressure level is reduced as the flow passes through the labyrinth seal 280 such that a much lower pressure (nearly atmospheric or ambient) is applied to the remainder of the back side 184 of the impeller 85. While the net axial thrust, as indicated by arrow 430, is still toward the inducer 155, the magnitude of the thrust is greatly reduced. The reduced thrust allows for the use of a smaller thrust bearing that consumes less power and is less susceptible to excessive heating.

While the illustrated construction employs an extension 200 positioned to maintain the direction of the net axial thrust as illustrated in Figs. 10 and 11, it should be readily apparent that the position of the extension 200 could be changed to adjust, and potentially reverse the thrust load if desired.

It should be noted that other arrangements of the compression system 10 may be exposed or operated in pressure regimes other than atmospheric. For example, multi-stage compression systems may employ stages in which the outlet of the labyrinth seal 280 is at a pressure that is much greater than atmospheric pressure. As such, the invention should not be limited to the pressure values disclosed herein.

Thus, the invention provides, among other things, a compressor system 10 that includes an impeller 85 having a seal system arranged to improve the performance of the impeller 85. Various features and advantages of the invention are set forth in the following claims.

## Claims

1. An impeller (85) for a centrifugal gas compressor (20) including a stationary seal member (270) that includes a plurality of seal tips (335), the impeller operable to produce a flow of fluid, the impeller comprising:
a hub (181) including a front face (182), a back face (184), and an axis of rotation;
a plurality of blades (150) extending from the front face, each of the blades having an inducer portion (155) and an exducer portion (160) and cooperating with an adjacent blade and the front face to at least partially define one of a plurality of impeller channels (175), a portion of the flow of fluid passing through one of the impeller channels such that the flow of fluid defines a first pressure adjacent the inducer portion (155) and a second pressure that is higher than the first pressure adjacent the exducer portion (160); and caracterised in that there is provided
an extension (200) cantilevered axially from the back face (184), the extension (200) including a radially outer face including a seal portion (215) with a plurality of stepped surfaces (220) wherein a first of the stepped surfaces nearest the back face has a first diameter and each subsequent step in a direction away from the back face has a smaller diameter than the first of the stepped surfaces and an adjacent stepped surface on the side nearest the back face, each of the seal tips (335) disposed adjacent one of the stepped surfaces (220) to define a plurality of seal points.

2. The impeller of claim 1, wherein a bore extends from the front face (182) to the back face (184).

3. The impeller of claim 1, wherein each step (220) includes a generally axially extending first portion (255) and a generally radially extending second portion (260).

4. The impeller of claim 3, wherein each seal tip (335) cooperates with one of the axially extending first portion (255) and the radially extending second portion (260) to define a radial seal point and an axial seal point.

5. The impeller of claim 1, wherein the extension (200) divides the impeller back face (184) into a first annular area (235) and a second annular area (240), and wherein the first annular area interfaces with a first volume of gas at a pressure substantially the same as the gas discharged from the blades (150) and the second annular area (240) interfaces with a second volume of gas at a pressure substantially less than the gas discharged from the blades.

6. The impeller of claim 1, wherein the blades (150), hub (181), and the extension (200), including the seal portion (215), are integrally-formed as a single component.

7. The impeller of claim 1, wherein a sequence defined by corresponding radial dimensions of the steps (220) in axial order, starting with a step nearest the blades (150) decreases substantially uniformly.

8. The impeller of claim 1, wherein the exducer portion (160) defines an exducer diameter and the seal portion (215) defines an average seal diameter that is greater than or equal to about 50 percent of the exducer diameter.

## Patentansprüche

1. Antriebsrad (85) für einen Radialgasverdichter (20), das ein stationäres Dichtungselement (270) umfasst, das eine Vielzahl von Dichtungsköpfen (335) umfasst, wobei das Antriebsrad funktionsfähig ist, um einen Fluidstrom zu erzeugen, wobei das Antriebsrad aufweist:
eine Nabe (181), die eine Vorderfläche (182), eine Hinterfläche (184) und eine Rotationsachse umfasst;
eine Vielzahl von Schaufeln (150), die sich von der Vorderfläche aus erstreckt, wobei eine jede der Schaufeln einen Einlaufteilabschnitt (155) und einen Auslaufteilabschnitt (160) aufweist und mit einer benachbarten Schaufel und der Vorderfläche zusammenwirkt, um mindestens teilweise einen von einer Vielzahl von Antriebsradkanälen (175) zu definieren, wobei ein Teil des Fluidstromes durch einen der Antriebsradkanäle so hindurchgeht, dass der Fluidstrom einen ersten Druck benachbart dem Einlaufteilabschnitt (155) und einen zweiten Druck definiert, der höher ist als der erste Druck, benachbart dem Auslaufteilabschnitt (160), und **dadurch gekennzeichnet, dass**
eine Verlängerung (200) vorhanden ist, axial freistehend von der Hinterfläche (184), wobei die Verlängerung (200) eine radial äußere Fläche umfasst, die einen Dichtungsabschnitt (215) mit einer Vielzahl von abgestuften Flächen (220) umfasst, wobei eine erste der abgestuften Flächen, die der Hinterfläche am nächsten ist, einen ersten Durchmesser aufweist, und wobei eine jede nachfolgende Stufe in einer Richtung weg von der Hinterfläche einen kleineren Durchmesser als die erste der abgestuften Flächen und eine benachbarte abgestufte Fläche auf der Seite aufweist, die der Hinterfläche am nächsten ist, wobei ein jeder der Dichtungsköpfe (335) benachbart einer der abgestuften Flächen (220) angeordnet ist, um eine Vielzahl von Dichtungsstellen zu definieren.

2. Antriebsrad nach Anspruch 1, bei dem sich eine Bohrung von der Vorderfläche (182) zur Hinterfläche (184) erstreckt.

3. Antriebsrad nach Anspruch 1, bei dem eine jede Stufe (220) einen im Allgemeinen sich axial erstreckenden ersten Abschnitt (255) und einen im Allgemeinen sich radial erstreckenden zweiten Abschnitt (260) aufweist.

4. Antriebsrad nach Anspruch 3, bei dem ein jeder Dichtungskopf (335) mit einem von dem sich axial erstreckenden ersten Abschnitt (255) und dem sich radial erstreckenden zweiten Abschnitt (260) zusammenwirkt, um eine radiale Dichtungsstelle und eine axiale Dichtungsstelle zu definieren.

5. Antriebsrad nach Anspruch 1, bei dem die Verlängerung (200) die Hinterfläche (184) des Antriebsrades in eine erste ringförmige Fläche (235) und eine zweite ringförmige Fläche (240) unterteilt, und bei dem die erste ringförmige Fläche mit einem ersten Gasvolumen mit einem Druck in Beziehung steht, der im Wesentlichen der gleiche ist wie bei dem Gas, das aus den Schaufeln (150) austritt, und bei dem die zweite ringförmige Fläche (240) mit einem zweiten Gasvolumen mit einem Druck in Beziehung steht, der im Wesentlichen geringer ist als bei dem Gas, das aus den Schaufeln austritt.

6. Antriebsrad nach Anspruch 1, bei dem die Schaufeln (150), die Nabe (181) und die Verlängerung (200), einschließlich des Dichtungsabschnittes (215), zusammenhängend als ein einzelnes Bauteil ausgebildet sind.

7. Antriebsrad nach Anspruch 1, bei dem eine Reihe, die durch entsprechende radiale Abmessungen der Stufen (220) in axialer Anordnung definiert wird, beginnend mit einer Stufe, die den Schaufeln (150) am nächsten ist, eine im Wesentlichen gleichmäßige Abnahme zeigt.

8. Antriebsrad nach Anspruch 1, bei dem der Auslaufteilabschnitt (160) einen Auslaufteildurchmesser definiert und der Dichtungsabschnitt (215) einen mittleren Dichtungsdurchmesser definiert, der größer als oder gleich etwa 50 Prozent des Auslaufteildurchmessers ist.

## Revendications

1. Rotor (85) pour un compresseur de gaz centrifuge (20), englobant un élément d'étanchéité stationnaire (270) englobant plusieurs pointes d'étanchéité (335), le rotor servant à produire un écoulement de fluide, le rotor comprenant :
un moyeu (181), englobant une face avant (182), une face arrière (184) et un axe de rotation ;
plusieurs aubes (150), s'étendant à partir de la face avant, chacune des aubes comportant une partie d'admission (155) et une partie d'évacuation (160) et coopérant avec une aube adjacente et avec la face avant pour définir au moins en partie un de plusieurs canaux du rotor (175), une partie de l'écoulement du fluide passant à travers l'un des canaux du rotor, de sorte que l'écoulement du fluide définit une première pression près de la partie d'admission (155) et une deuxième pression, supérieure à la première pression, près de la partie d'évacuation (160) ; et **caractérisé en ce qu'**il comprend :
une extension (200), s'étendant axialement en porte-à-faux à partir de la face arrière (184), l'extension (200) englobant une face radialement externe englobant une partie d'étanchéité (215) avec plusieurs surfaces étagées (220), une première surface des surfaces étagées, la plus proche de la face arrière ayant un premier diamètre, et chaque étage suivant dans une direction allant à l'écart de la face arrière ayant un diamètre inférieur à celui de la première surface des surfaces étagées et à celui d'une surface étagée adjacente sur le côté le plus proche de la face arrière, chacune des pointes d'étanchéité (355) étant agencée près de l'une des surfaces étagées (220), pour définir plusieurs points d'étanchéité.

2. Rotor selon la revendication 1, dans lequel un alésage s'étend de la face avant (182) vers la face arrière (184).

3. Rotor selon la revendication 1, dans lequel chaque étage (220) englobe une première partie à extension généralement axiale (255) et une deuxième partie à extension généralement radiale (260).

4. Rotor selon la revendication 3, dans lequel chaque pointe d'étanchéité (335) coopère avec une partie, la première partie à extension axiale (255) ou la deuxième partie à extension radiale (260), pour définir un point d'étanchéité radial et un point d'étanchéité axial.

5. Rotor selon la revendication 1, dans lequel l'extension (200) divise la face arrière du rotor (184) en une première zone annulaire (235) et une deuxième zone annulaire (240), la première zone annulaire étant reliée à un premier volume de gaz, à une pression pratiquement identique à celle du gaz déchargé à partir des aubes (150), la deuxième zone annulaire (240) étant reliée à un deuxième volume de gaz, à une pression pratiquement inférieure à celle du gaz déchargé à partir des aubes.

6. Rotor selon la revendication 1, dans lequel les aubes (150), le moyeu (181) et l'extension (200), englobant la partie d'étanchéité (215), sont formés d'une seule pièce, sous forme d'un seul composant.

7. Rotor selon la revendication 1, dans lequel une séquence définie par les dimensions radiales correspondantes des étages (220), dans un ordre axial, démarrant avec l'étage le plus proche des aubes (150), se réduit de manière pratiquement uniforme.

8. Rotor selon la revendication 1, dans lequel la partie d'évacuation (160) définit un diamètre d'évacuation, la partie d'étanchéité (215) définissant un diamètre d'étanchéité moyen, supérieur ou égal à environ 50 pour cent du diamètre d'évacuation.
